# EUROPEAN PATENT APPLICATION

(11) **EP 4 236 527 A1**
(43) Date of publication of application: **30.08.2023**
(21) Application number: 20958751.8
(22) Date of filing: 23.10.2020
(51) Int. Cl.: H04W 72/04, H04W 72/12

(54) **TERMINAL, AND COMMUNICATION METHOD**

(71) Applicant: NTT DOCOMO, INC., Tokyo 100-6150 (JP)
(72) Inventor: OKAMURA, Masaya, Tokyo 100-6150 (JP); HARADA, Hiroki, Tokyo 100-6150 (JP); OHARA, Tomoya, Tokyo 100-6150 (JP)
(74) Representative: Hoffmann Eitle
(86) International application number: PCT/JP2020/040013
(87) International publication number: WO 2022/085203

(57) **Abstract**

A terminal includes: a reception unit configured to receive, from a base station, a control channel for cross-carrier scheduling from a secondary cell to a primary cell or to a primary secondary cell group cell, and a control channel for self-carrier scheduling from the primary cell or from the primary secondary cell group cell; and a communication unit configured to receive a shared channel from the base station, or transmit a shared channel to the base station, based on the received control channel.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

Dynamic spectrum sharing (DSS) for enabling LTE and NR to coexist in the same band has been discussed (for example, Non-Patent Document 2). Coexistence of different RATs (Radio Access Technology) in a single carrier allows flexibility in meeting the traffic demand during the system generation switching period.

### [Citation List]

### [Non-Patent Document]

[Non-Patent Document 1] 3GPP TS 38.300 V15.8.0 (2019-12)
[Non-Patent Document 2] 3GPP TSG RAN Meeting #86 RP-192678 (2019-12)

### SUMMARY OF THE INVENTION

### [TECHNICAL PROBLEM]

According to the current DSS technical specifications, resources for transmitting or receiving a control signal are configured to an LTE terminal and to an NR terminal. Resources in which a control signal can be arranged are defined in advance, and systems coexist in a single carrier, and thus, it is assumed that resources for transmitting or receiving a control signal become insufficient as compared with resources of a case in which the systems independently operate in different carriers. And thus, performing cross-carrier scheduling from a secondary cell is being discussed.

On the other hand, in a case where cross-scheduling is performed from a secondary cell to a primary cell or to a primary secondary cell group cell, a problem may occur in self-carrier scheduling according to a conventional method.

The present invention has been made in view of the foregoing points and enables to support cross-carrier scheduling and self-carrier scheduling in a wireless communication system.

### [SOLUTION TO PROBLEM]

According to the disclosed technique, a terminal is provided. The terminal includes: a reception unit configured to receive, from a base station, a control channel for cross-carrier scheduling from a secondary cell to a primary cell or to a primary secondary cell group cell, and a control channel for self-carrier scheduling from the primary cell or from the primary secondary cell group cell; and a communication unit configured to receive a shared channel from the base station, or transmit a shared channel to the base station, based on the received control channel.

### [ADVANTAGEOUS EFFECTS OF INVENTION]

According to the disclosed technique, it is possible to support cross-carrier scheduling and self-carrier scheduling in a wireless communication system.

### BRIEF DESCRIPTION OF THE DRAWINGS

[Fig. 1] Fig. 1 is a drawing illustrating a configuration example of a wireless communication system according to an embodiment of the present invention.
[Fig. 2] Fig. 2 is a drawing illustrating an LTE and NR downlink channel arrangement example according to DSS.
[Fig. 3] Fig. 3 is a drawing illustrating an example (1) of cross-carrier scheduling.
[Fig. 4] Fig. 4 is a drawing illustrating an example (2) of cross-carrier scheduling.
[Fig. 5] Fig. 5 is a drawing illustrating an example (3) of cross-carrier scheduling.
[Fig. 6] Fig. 6 is a drawing illustrating an example (1) of cross-carrier scheduling according to an embodiment of the present invention.
[Fig. 7] Fig. 7 is a drawing illustrating control information in an embodiment of the present invention.
[Fig. 8] Fig. 8 is a drawing illustrating an example (2) of cross-carrier scheduling according to an embodiment of the present invention.
[Fig. 9] Fig. 9 is a drawing illustrating an example (3) of cross-carrier scheduling according to an embodiment of the present invention.
[Fig. 10] Fig. 10 is a drawing illustrating an example (4) of cross-carrier scheduling according to an embodiment of the present invention.
[Fig. 11] Fig. 11 is a drawing illustrating an example of a functional structure of a base station 10 according to an embodiment of the present invention.
[Fig. 12] Fig. 12 is a drawing illustrating an example of a functional structure of a terminal 20 according to an embodiment of the present invention.
[Fig. 13] Fig. 13 is a drawing illustrating an example of a hardware structure of a base station 10 or a terminal 20 according to an embodiment of the present invention.

### DETAILED DESCRIPTION OF THE PREFERRED EMBODIMENTS

In the following one or more embodiments of the present invention will be described with reference to the drawings. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR) .

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, etc.,).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

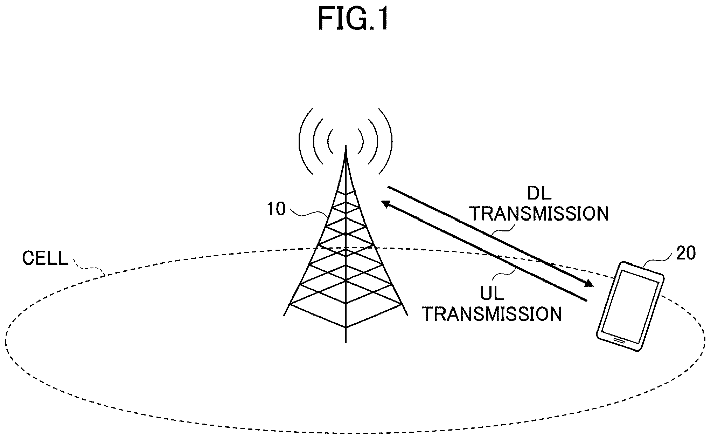

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (Scell: Secondary Cell) and a primary cell (PCell: Primary Cell) using CA (Carrier Aggregation). In addition, the terminal 20 may perform communications via a primary cell of the base station 10 and a primary secondary cell (PSCell: Primary Secondary Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

Hereinafter, an example of a DSS (Dynamic Spectrum Sharing) technology that allows LTE and NR to coexist in the same band will be described. According to the DSS technology, coexistence of different RATs (Radio Access Technology) in a single carrier allows flexibility in meeting the traffic demand during the system generation switching period. According to the DSS technology, different RATs can be operated in a single carrier.

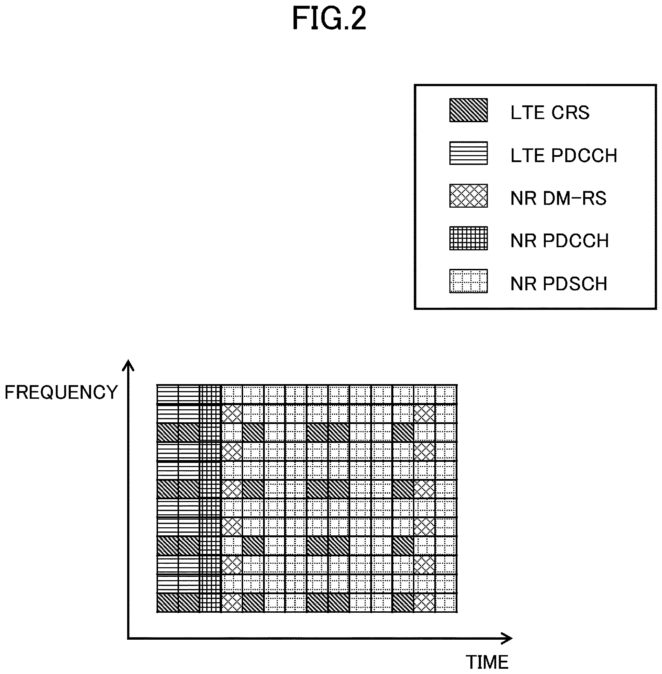

Fig. 2 is a drawing illustrating an LTE and NR downlink channel arrangement example according to DSS. The time domain illustrated in Fig. 2 corresponds to one (1) subframe of LTE. As shown in Fig. 2, in the downlink, "LTE-CRS (Cell specific reference signal)" and "LTE-PDCCH" are transmitted as LTE signals or channels. In addition, as shown in Fig. 2, in the downlink, "NR-PDCCH" and "NR-PDSCH" are transmitted as NR channels, and DM-RS (Demodulation reference signal) is arranged as an NR reference signal.

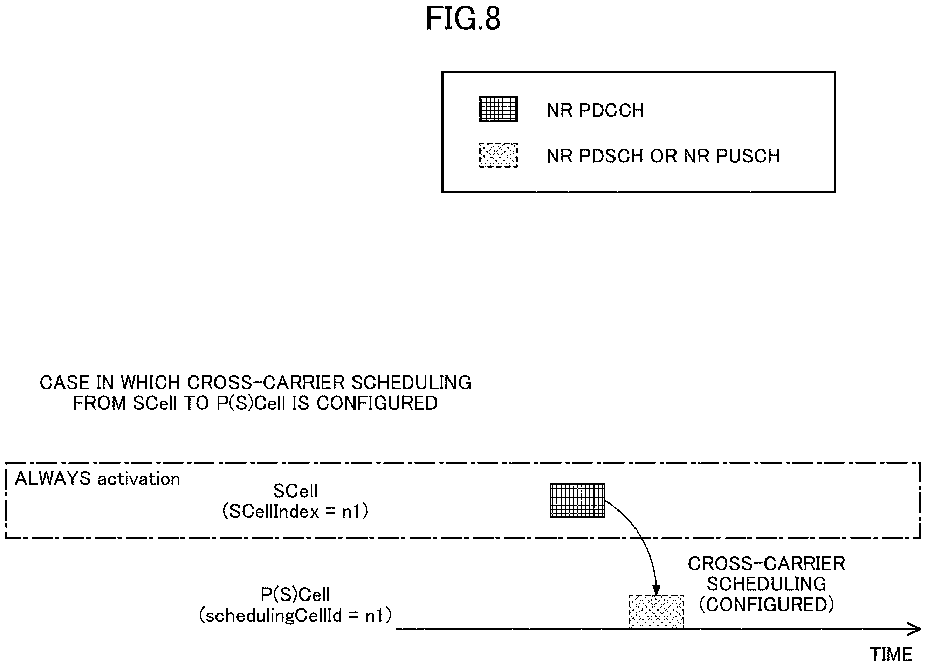

For example, as shown in Fig. 2, "LTE-CRS" may be and arranged adjacent to "NR-PDSCH". In the current DSS specifications, corresponding signals for the same purpose are transmitted to respective LTE terminals and NR terminals. As shown in Fig. 8, separately transmitting LTE and NR signals, increases the overhead and reduces the resources to transmit data.

In addition, because resources for LTE-PDCCH and resources for NR-PDCCH overlap with each other in the first 1 to 3 symbols of a slot, in a case where DSS is configured, the resources for LTE-PDCCH or NR-PDCCH are limited compared to a case where DSS is not configured. For example, LTE-PDCCH is arranged in two symbols and NR-PDCCH is arranged in one symbol, which reduces each resource compared to a case where DSS is not configured.

Further, in the current standard specifications, a cell capable of scheduling a primary cell (PCell (Primary Cell)) or a primary secondary cell group cell (PSCell (Primary SCG Cell)) is only the self cell (the cell itself) (hereinafter, the primary cell or the primary secondary cell group cell is referred to as P(S)Cell). In other words, PDCCH in the secondary cell (SCell (Secondary Cell)) cannot schedule PDSCH or PUSCH in P(S)Cell. Therefore, there is a concern that the PDCCH resources of P(S)Cell will be insufficient when carrier aggregation is performed during DSS application.

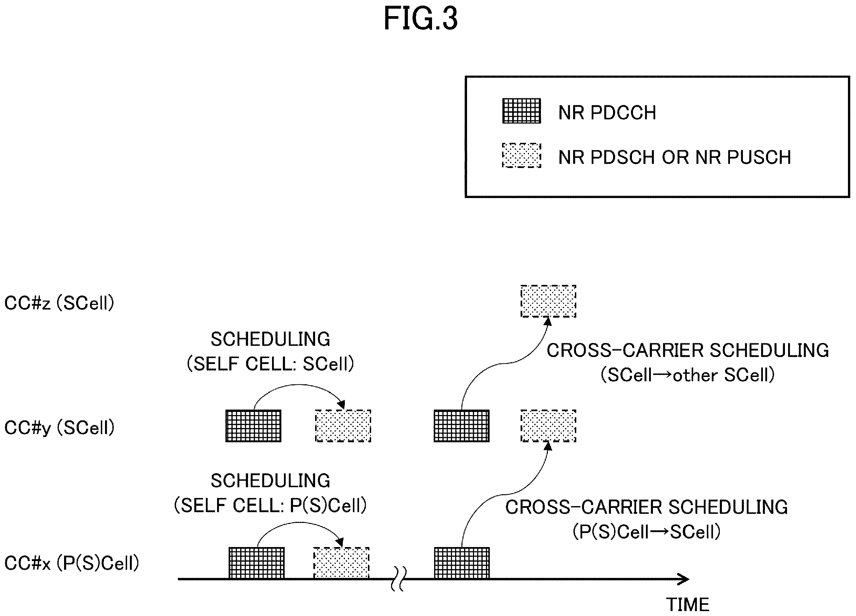

And thus, the PDCCH resource shortage of P(S)Cell is reduced by performing cross-carrier scheduling from a secondary cell. Fig. 3 is a drawing illustrating an example (1) of cross-carrier scheduling. In Fig. 3, P(S)Cell is arranged in CC#x, SCell is arranged in CC#y, and another SCell is arranged in CC#z. As shown in Fig. 3, in conventional cross-carrier scheduling, PDSCH or PUSCH of SCell is scheduled by PDCCH of P(S)Cell, or PDSCH or PUSCH of another SCell is scheduled by PDCCH of the SCell. Self-carrier scheduling of P(S)Cell and SCell is also supported, as shown in Fig. 3.

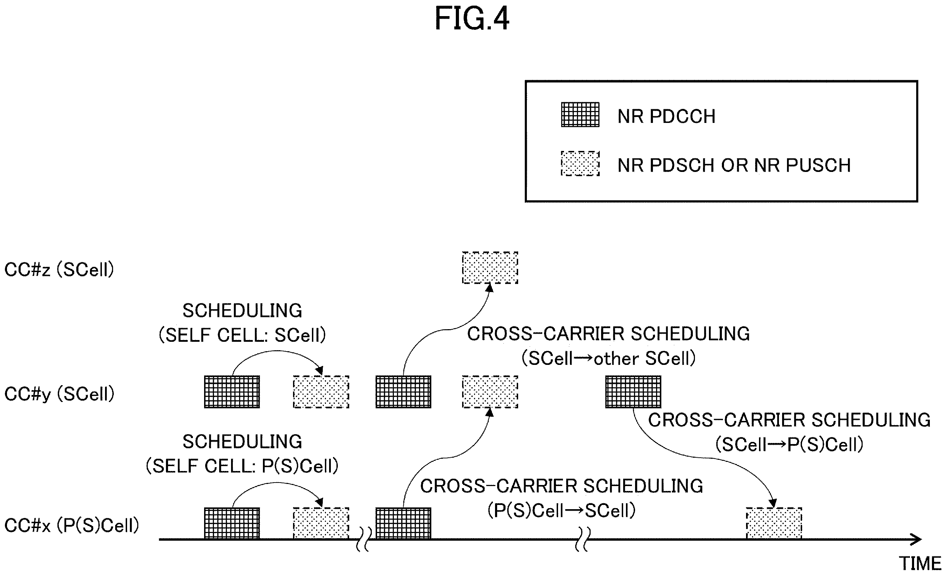

Fig. 4 is a drawing illustrating an example (2) of cross-carrier scheduling. As shown in Fig. 4, in addition to the scheduling of PDSCH or PUSCH of SCell by PDCCH of P(S)Cell and the scheduling of PDSCH or PUSCH of another SCell by PDCCH of SCell, the scheduling of PDSCH or PUSCH of P(S)Cell by PDCCH of SCell can be performed.

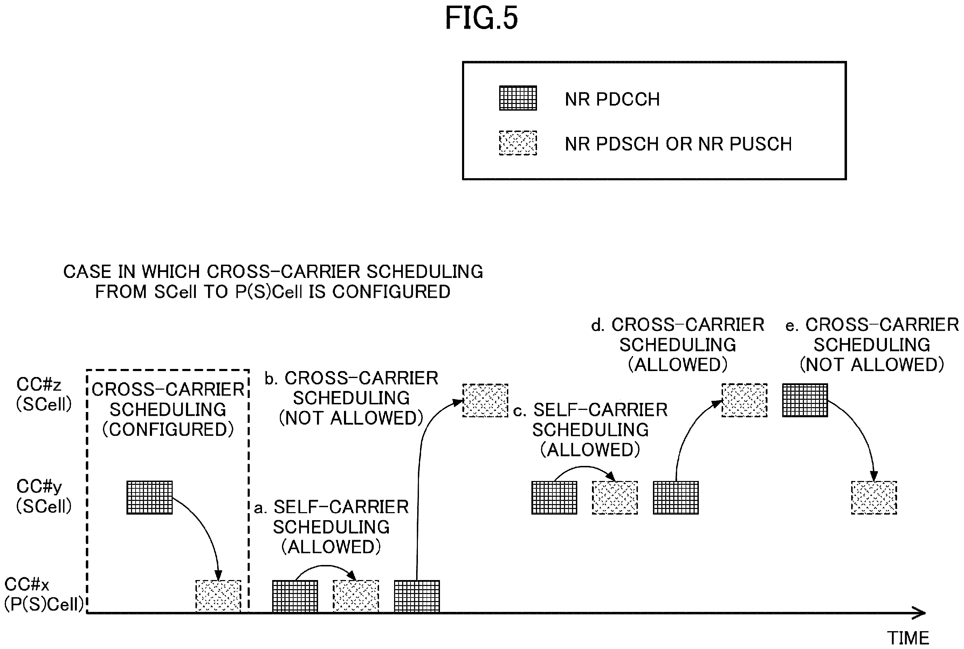

Fig. 5 is a drawing illustrating an example (3) of cross-carrier scheduling. In the current NR standard specifications, when cross-carrier scheduling is configured from SCell to P(S)Cell, as shown in Fig. 5, self-carrier scheduling is not supported in the cross-carrier-scheduled cell, and RRC reconfiguration (Radio Resource Control reconfiguration) is required to support the self-carrier scheduling.

In a case where cross-carrier scheduling is configured from SCell to P(S)Cell, in Fig. 5, a. self-carrier scheduling, c. self-carrier scheduling, and d. cross-carrier scheduling are agreed to be supported by specifications, while b. cross-carrier scheduling and e. cross-carrier scheduling are not supported by specifications. However, in the current NR standard specification, a. self-carrier scheduling cannot be supported.

Therefore, in a case where cross-carrier scheduling is configured from SCell to P(S)Cell, specification changes are required to support self-carrier scheduling by P(S)Cell.

Thus, for example, the terminal 20 assumes that PDSCH/PUSCH of P(S)Cell may be cross-carrier scheduled by SCell, and when cross-carrier scheduling is configured from SCell to P(S)Cell, the terminal 20 may switch between cross-carrier scheduling and self-carrier scheduling according to MAC-CE (Medium Access Control-Control Element) or DCI (Downlink Control Information).

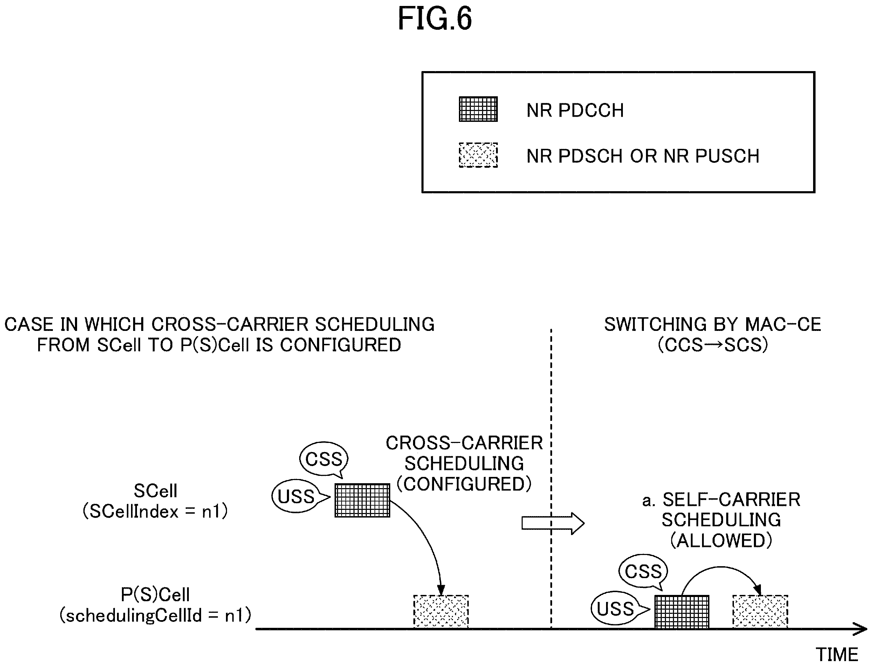

Fig. 6 is a drawing illustrating an example (1) of cross-carrier scheduling according to an embodiment of the present invention. As shown in Fig. 6, in a case where cross-carrier scheduling is configured from SCell to P(S)Cell, switching between cross-carrier scheduling and self-carrier scheduling may be performed by MAC-CE. MAC CE may have A bit length. A may be defined by specifications in advance, or may be configured by RRC. Note that, as shown in Fig. 6, the search space configured in SCell may be CSS (Common Search Space) and USS (UE specific Search Space), and the search space configured in P(S)Cell may be CSS and USS.

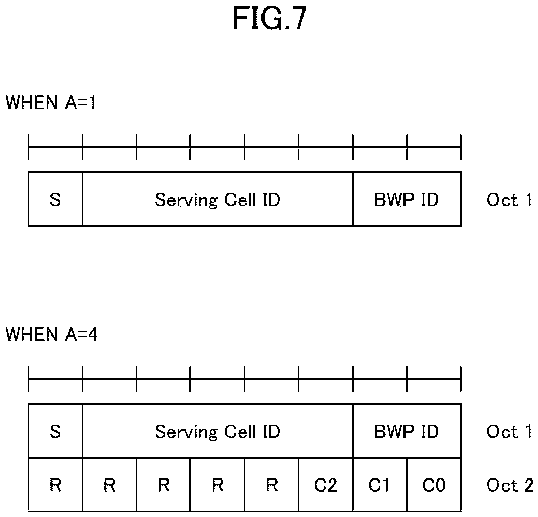

Fig. 7 is a drawing illustrating control information in an embodiment of the present invention. As shown in Fig. 7, in a case where A=l, the bit S may be configured in MAC-CE. For example, S=0 may indicate the self-carrier scheduling, and S=1 may indicate the cross-carrier scheduling. As shown in Fig. 7, the serving cell ID and BWPID may be indicated together with S.

In addition, as shown in Fig. 7, in a case where A=4, the bits S, C0, C1, and C2 may be configured in MAC-CE. For example, S=0 may indicate the self-carrier scheduling. In a case where C0=1, the cross-carrier scheduling from a secondary cell with SCellIndex=n1 may be indicated. In a case where C1=1, the cross-carrier scheduling from a secondary cell with SCellIndex=n2 may be indicated. In a case where C2=1, the cross-carrier scheduling from a secondary cell with SCellIndex=n3 may be indicated. Here, the terminal 20 assumes that multiple IDs, such as schedulingCellId = n1, n2, n3, are configured in P(S)Cell. Note that S is not required to be configured, and the self-carrier scheduling may be configured in a case where C0=C1=C2=0, for example.

In addition, in a case where cross-carrier scheduling is configured from SCell to P(S)Cell, switching between cross-carrier scheduling and self-carrier scheduling may be performed by DCI including a field with B bits. For example, B may have one bit length. The terminal 20 may assume that the field with B bits may be included in a specific DCI format. The specific DCI format may be, for example, format 2_6, or a new format, format 2_7.

Fig. 8 is a drawing illustrating an example (2) of cross-carrier scheduling according to an embodiment of the present invention. As shown in Fig. 8, when cross-carrier scheduling is configured from SCell to P(S)Cell, the terminal 20 may assume that the SCell performing cross-carrier scheduling for the P(S)Cell does not transition to, is not updated to, or is not indicated to, the deactivated state or the dormant state, by the MAC-CE/DCI.

In Fig, 8, an example is shown in which schedulingCellID of P(S)Cell is configured to n1 and SCellIndex of SCell is n1. It is assumed that the SCell is always in the activated state.

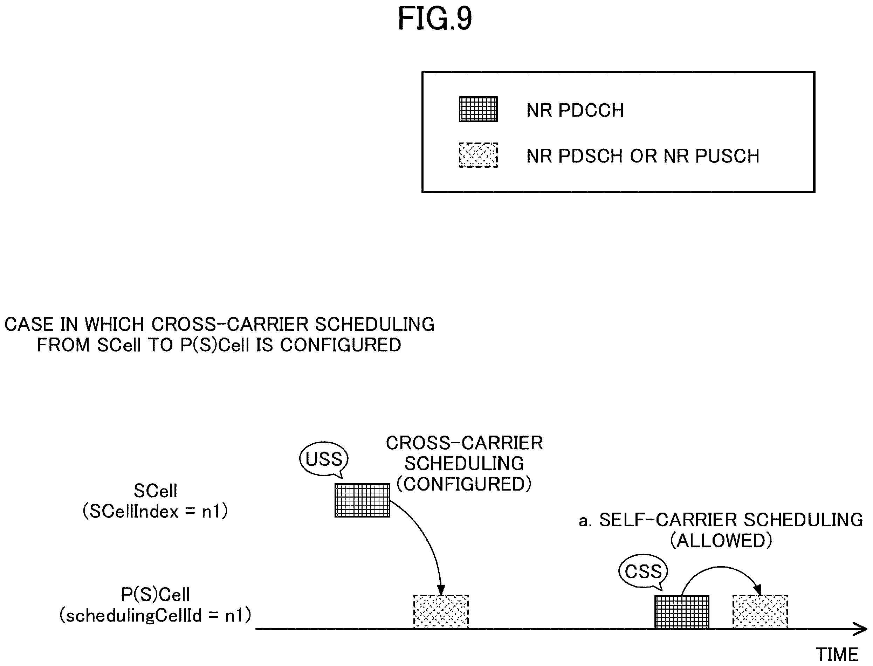

Fig. 9 is a drawing illustrating an example (3) of cross-carrier scheduling according to an embodiment of the present invention. As illustrated in Fig. 9, in a case where cross-carrier scheduling is configured from SCell (SCellIndex = n1) to P(S)Cell (schedulingCellID = n1), the user terminal 20 may assume that the search space types for monitoring and decoding for PDCCH reception are different between the P(S)Cell and the SCell.

For example, the terminal 20 may assume CSS for the P(S)Cell and USS for the SCell. For example, the terminal 20 may assume that the search space types for monitoring and decoding in the P(S)Cell and the SCell may be configured or updated by RRC or MAC-CE. The RRC configuration may be configured by the following information elements, for example.
monitoringSearchSpaceTypeForPcellscheduledFromScell CHOICE {common, ue-Specific}
monitoringSearchSpaceTypeForScellschedulingPcell CHOICE {common, ue-Specific}
In addition, they may be configured as CHOICE {common, ue-Specific, commonAndUe-Specific}.

In addition, for example, in a case where cross-carrier scheduling is configured from SCell (SCellIndex = n1) to P(S)Cell (schedulingCellID = n1), it may be assumed that, based on the number of configured CORESET (Control Resource Set) frequency resources: a search space type to be monitored and decoded for PDCCH reception of P(S)Cell or SCell is determined; or a DCI format is determined.

For example, in a case where the number of CORESET frequency resources (referred to as n_f) configured to P(S)Cell is equal to or less than (may be: less than; equal to or greater than; or greater than) X [PRB], the terminal 20 may assume CSS for receiving PDCCH of P(S)Cell, and may assume USS for receiving PDCCH of SCell. The value of X may be specified in the specification in advance, may be determined from a table or formula, or may be configured or updated by RRC or MAC-CE. The above-described search space type to be monitored and decoded is an example.

For example, when X = 18 and n_f = 12, the terminal 20 may monitor and decode CSS for P(S)Cell and USS for SCell. If n_f = 24, then the terminal 20 may monitor and decode CSS and USS for P(S)Cell and USS for SCell.

For example, the terminal 20 may determine the search space type to be monitored and decoded, from the configured number of CORESET frequency resources, based on a table.

**[Table 1]**

| Number of configured resources (n_f) | Monitored/decoded SS type on P(S)Cell | Monitored/decoded SS type on SCell |
|---|---|---|
| 6 | CSS | USS |
| 12 | CSS | USS |
| ... | CSS | USS |
| 36 | CSS, USS | USS |
| ... | CSS, USS | USS |

As shown in Table 1, in a case where n_f is less than 36, the terminal 20 may monitor and decode CSS for P(S)Cell and USS for SCell. In a case where n_f is equal to or greater than 36, the terminal 20 may monitor and decode CSS and USS for P(S)Cell and USS for SCell. Note that Table 1 is an example, and, USS alone may be monitored and decoded for P(S)Cell.

In addition, for example, in a case where cross-carrier scheduling is configured from SCell (SCellIndex = n1) to P(S)Cell (schedulingCellID = n1), it may be assumed that, based on the number of configured or activated SCells: a search space type to be monitored and decoded for PDCCH reception of P(S)Cell or SCell is determined; or a DCI format is determined.

For example, in a case where the configured or activated number (referred to as n_c) is equal to or greater than (may be: greater than; equal to or less than; or less than) Y [cells], the terminal 20 may assume CSS for receiving PDCCH of P(S)Cell, and may assume USS for receiving PDCCH of SCell. The value of Y may be specified in the specification in advance, may be determined from a table or formula, or may be configured or updated by RRC or MAC-CE. The above-described search space type to be monitored and decoded is an example.

For example, when Y = 2 and n_c = 1, the terminal 20 may monitor and decode CSS and USS for P(S)Cell and USS for SCell. If n_c = 2, then the terminal 20 may monitor and decode CSS for P(S)Cell and USS for SCell.

For example, the terminal 20 may determine the search space type to be monitored and decoded, from the configured or activated number of SCells, based on a table.

**[Table 2]**

| Number of configured SCells (n_c) | Monitored/decoded SS type on P(S)Cell | Monitored/decoded SS type on SCell |
|---|---|---|
| 0 | CSS, USS | ... |
| 1 | CSS, USS | USS |
| 2 | CSS, USS | USS |
| 3 | CSS | USS |
| 4 | CSS | USS |

As shown in Table 2, in a case where n_c is equal to or greater than 3, the terminal 20 may monitor and decode CSS for P(S)Cell and USS for SCell. In a case where n_c is less than 3, the terminal 20 may monitor and decode CSS and USS for P(S)Cell and USS for SCell. Note that Table 2 is an example, and, USS alone may be monitored and decoded for P(S)Cell.

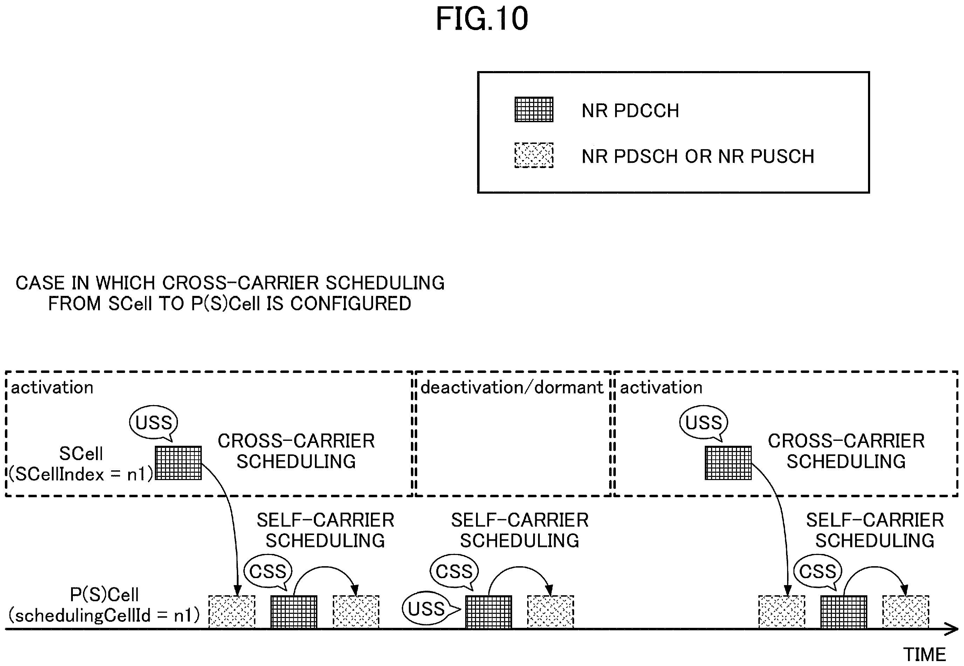

Fig. 10 is a drawing illustrating an example (4) of cross-carrier scheduling according to an embodiment of the present invention. In a case where cross-carrier scheduling is configured from SCell (SCellIndex = n1) to P(S)Cell (schedulingCellID = n1), it may be assumed that, based on the state of SCell: a search space type to be monitored and decoded for PDCCH reception of P(S)Cell or SCell is determined; or a DCI format is determined.

For example, as shown in Fig. 10, in a case where SCell is transitioned to a state other than the activated state (e.g., deactivated state, dormant state): the search space type to be monitored and decoded for P(S)Cell may be assumed to be CSS and USS, or assumed to be only CSS; and only DCI format 0_0 or 1_0 may be assumed. The search space type to be monitored and decoded may be specified by specifications in advance, or may be configured or updated by RRC or MAC-CE.

In addition, for example, as shown in Fig. 10, it may be assumed that PDSCH/PUSCH of P(S)Cell is cross-carrier scheduled from SCell in a case where the SCell is in the activated state, and that PDSCH/PUSCH of P(S)Cell is self-carrier scheduled from the SCell, and in a case where the SCell is in a state other than the activated state (for example, deactivated state, dormant state).

Note that the terminal 20 may assume that, in a case where cross-carrier scheduling from SCell to P(S)Cell is configured, enabling and disabling of: switching between cross-carrier scheduling and self-carrier scheduling; or switching between search space types to be monitored and decoded, by MAC-CE or DCI, is configured by RRC. For example, in a case where the disabling is configured by RRC, the terminal 20 may assume that P(S)Cell is always cross-carrier scheduled from SCell, and may assume that the terminal 20 does not monitor PDCCH of P(S)Cell.

For example, the RRC parameter in a case where the terminal 20 assumes only the SCell as the cross-carrier scheduling source for P(S)Cell, may be configured or specified separately from the RRC parameter in a case where the terminal 20 assumes both cross-carrier scheduling from SCell and self-carrier scheduling from P(S)Cell.

In addition, for example, the terminal 20 may report, to the network, the UE capability indicating whether or not to support: switching between cross-carrier scheduling and self-carrier scheduling; or switching between search space types to be monitored, according to MAC-CE or DCI in a case where cross-carrier scheduling is configured from SCell to P(S)Cell.

Signaling from the base station 10 to the terminal 20 or signaling from the terminal 20 to the base station 10 in the embodiments described above is not limited to explicit methods, but may be indicated in an implicit manner. Further, signaling may not be performed and technical specifications may be uniquely specified.

The signaling from the base station 10 to the terminal 20 or the signaling from the terminal 20 to the base station 10 in the embodiments described above may be signaling of a different layer such as RRC signaling, MAC-CE signaling, or DCI signaling, or may be signaling via broadcast information (MIB (Master Information Block) or SIB (System Information Block)). Further, for example, RRC signaling and DCI signaling may be combined, RRC signaling and MAC-CE signaling may be combined, or RRC signaling, MAC-CE signaling, and DCI signaling may be combined.

In the above-described embodiments, LTE and NR have been described, but the above-described embodiments may be applied to a future communication system (e.g., "6G") beyond NR. For example, the above-described embodiments may be applied to NR and 6G co-existence techniques.

The embodiments described above can be combined with each other. The features shown in the above-described embodiments can be combined together in various combinations. The combinations are not limited to a particular combination disclosed.

According to the above-described embodiments, P(S)Cell can be cross-scheduled from SCell and self-carrier scheduled in P(S)Cell, depending on the configuration or situation, without performing RRC reconfiguration.

That is, it is possible to support cross-carrier scheduling and self-carrier scheduling in a wireless communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

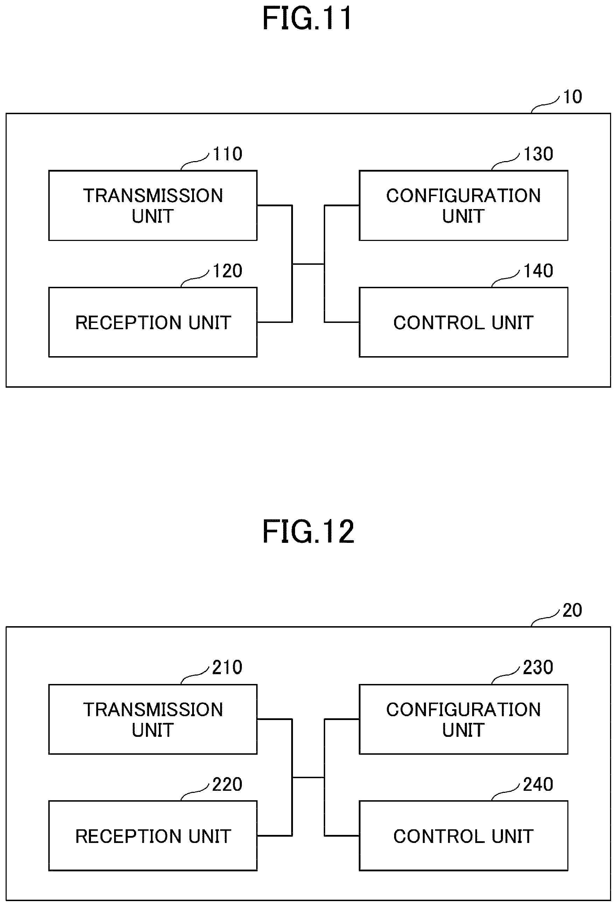

Fig. 11 is a drawing illustrating an example of a functional structure of a base station 10 according to an embodiment of the present invention. As shown in Fig. 11, the base station 10 includes a transmission unit 110, a reception unit 120, a configuration unit 130, and a control unit 140. The functional structure illustrated in Fig. 11 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. The contents of the configuration information are, for example, information related to the configuration of DSS, information related to scheduling including cross-carrier scheduling and self-carrier scheduling.

The control unit 140 performs control related to the DSS configuration as described in the embodiments. Further, the control unit 140 controls communications according to DSS. Further, the control unit 140 performs control related to scheduling including cross-carrier scheduling and self-carrier scheduling. The functional units related to signal transmission in the control unit 140 may be included in the transmission unit 110, and the functional units related to signal reception in the control unit 140 may be included in the reception unit 120.

### <Terminal 20>

Fig. 12 is a drawing illustrating an example of a functional structure of a terminal 20 according to an embodiment of the present invention. As shown in FIG. 12, the terminal 20 includes a transmission unit 210, a reception unit 220, a configuration unit 230, and a control unit 240. The functional structure illustrated in Fig. 12 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 stores pre-configured configuration information. The contents of the configuration information are, for example, information related to the configuration of DSS, information related to scheduling including cross-carrier scheduling and self-carrier scheduling.

The control unit 240 performs control related to the DSS configuration as described in the embodiments. Further, the control unit 240 controls communications according to DSS. Further, the control unit 240 performs control related to scheduling including cross-carrier scheduling and self-carrier scheduling. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 11 and Fig. 12), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

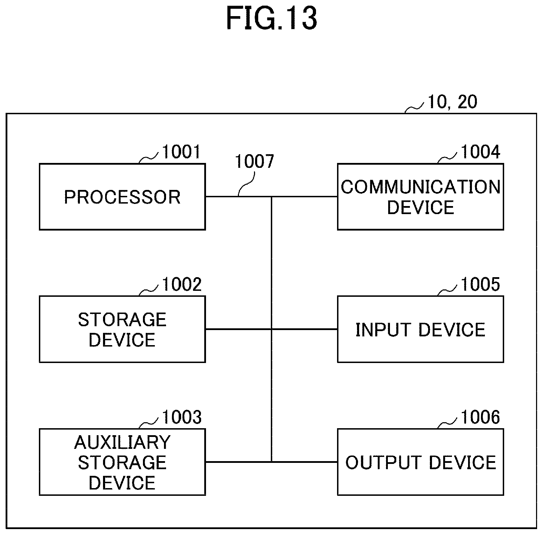

For example, the base station 10, terminal 20, etc., according to an embodiment of the present disclosure may function as a computer for processing the radio communication method of the present disclosure. Fig. 13 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 11 may be realized by control programs that are stored in the storage device 1002 and are executed by the processor 1001. Further, for example, the control unit 240 of the terminal 20 illustrated in Fig. 12 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a terminal is provided. The terminal includes: a reception unit configured to receive, from a base station, a control channel for cross-carrier scheduling from a secondary cell to a primary cell or to a primary secondary cell group cell, and a control channel for self-carrier scheduling from the primary cell or from the primary secondary cell group cell; and a communication unit configured to receive a shared channel from the base station, or transmit a shared channel to the base station, based on the received control channel.

According to the above-described configuration, P(S)Cell can be cross-scheduled from SCell and self-carrier scheduled in P(S)Cell, depending on the configuration or situation, without performing RRC reconfiguration. That is, it is possible to support cross-carrier scheduling and self-carrier scheduling in a wireless communication system.

The reception unit may switch between: assuming cross-carrier scheduling; and assuming self-carrier scheduling, based on layer 1 signaling or layer 2 signaling. According to the above-described configuration, P(S)Cell can be cross-scheduled from SCell and self-carrier scheduled in P(S)Cell, depending on the configuration or situation, without performing RRC reconfiguration.

The reception unit may assume that the secondary cell is always activated in a case where cross-carrier scheduling from the secondary cell to the primary cell or the primary secondary cell group cell is configured. According to the above-described configuration, P(S)Cell can be cross-scheduled from SCell and self-carrier scheduled in P(S)Cell, depending on the configuration or situation, without performing RRC reconfiguration.

The reception unit may monitor a user-specific search space in response to receiving a control channel for the cross-carrier scheduling, and may monitor a common search space in response to receiving a control channel for the self-carrier scheduling. According to the above-described configuration, P(S)Cell can be cross-scheduled from SCell and self-carrier scheduled in P(S)Cell, depending on the search space type, without performing RRC reconfiguration.

The reception unit may determine a search space type to be monitored when receiving a control channel, based on a size of a frequency domain of a control information set or a number of configured secondary cells. According to the above-described configuration, P(S)Cell can be cross-scheduled from SCell and self-carrier scheduled in P(S)Cell, depending on the search space type, without performing RRC reconfiguration.

In addition, according to an embodiment of the present invention, a communication method performed by a terminal is provided. The communication method includes: receiving, from a base station, a control channel for cross-carrier scheduling from a secondary cell to a primary cell or to a primary secondary cell group cell, and a control channel for self-carrier scheduling from the primary cell or from the primary secondary cell group cell; and receiving a shared channel from the base station, or transmitting a shared channel to the base station, based on the received control channel.

According to the above-described configuration, P(S)Cell can be cross-scheduled from SCell and self-carrier scheduled in P(S)Cell, depending on the configuration or situation, without performing RRC reconfiguration. That is, it is possible to support cross-carrier scheduling and self-carrier scheduling in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts.
Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for individually referring to a radio frame, a subframe, a slot, a mini slot and a symbol.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is noted that PDCCH in the present disclosure is an example of a control channel. PDSCH or PUSCH is an example of a shared channel. The transmission unit 210 and the reception unit 220 are examples of communication units. DCI is an example of layer 1 signaling. MAC CE is an example of layer 2 signaling. USS is an example of a user-specific search space. CSS is an example of a common search space. CORESET is an example of a control information resource set.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage apparatus
1003 Auxiliary storage apparatus
1004 Communication apparatus
1005 Input apparatus
1006 Output device

## Claims

1. A terminal comprising:
a reception unit configured to receive, from a base station, a control channel for cross-carrier scheduling from a secondary cell to a primary cell or to a primary secondary cell group cell, and a control channel for self-carrier scheduling from the primary cell or from the primary secondary cell group cell; and
a communication unit configured to receive a shared channel from the base station or transmit a shared channel to the base station, based on the received control channel.

2. The terminal as claimed in claim 1,
wherein
the reception unit switches between assuming cross-carrier scheduling and assuming self-carrier scheduling, based on layer 1 signaling or layer 2 signaling.

3. The terminal as claimed in claim 1,
wherein
the reception unit assumes that the secondary cell is always activated in a case where cross-carrier scheduling from the secondary cell to the primary cell or the primary secondary cell group cell is configured.

4. The terminal as claimed in claim 1,
wherein
the reception unit monitors a user-specific search space in response to receiving a control channel for the cross-carrier scheduling, and monitors a common search space in response to receiving a control channel for the self-carrier scheduling.

5. The terminal as claimed in claim 1,
wherein
the reception unit determines a search space type to be monitored when receiving a control channel, based on a size of a frequency domain of a control information resource set or a number of configured secondary cells.

6. A communication method executed by a terminal, comprising:
receiving, from a base station, a control channel for cross-scheduling from a secondary cell to a primary cell or to a primary secondary cell group cell, and a control channel for self-scheduling from the primary cell or from the primary secondary cell group cell; and
receiving a shared channel from the base station or transmitting a shared channel to the base station, based on the received control channel.
